Europäisches Patentamt

European Patent Office

Office européen des brevets

(19)

(11) Veröffentlichungsnummer : **0 033 139**
**B1**

(12) **EUROPÄISCHE PATENTSCHRIFT**

(45) Veröffentlichungstag der Patentschrift :
**11.04.84**

(51) Int. Cl.³ : **F 17 C 13/04**, F 16 K   1/30

(21) Anmeldenummer : **81100477.9**

(22) Anmeldetag : **23.01.81**

(54) **Druckabsperrventil und damit versehene Gasflasche.**

(30) Priorität : **26.01.80 DE 3002768**

(43) Veröffentlichungstag der Anmeldung :
**05.08.81 Patentblatt 81/31**

(45) Bekanntmachung des Hinweises auf die Patenterteilung : **11.04.84 Patentblatt 84/15**

(84) Benannte Vertragsstaaten :
**BE FR GB**

(56) Entgegenhaltungen :
**DE-A- 2 523 202**
**DE-A- 2 623 039**
**FR-A- 1 235 562**
**FR-A- 2 359 342**

(73) Patentinhaber : **Kernforschungsanlage Jülich Gesellschaft mit beschränkter Haftung**
**Postfach 1913**
**D-5170 Jülich (DE)**

**Gesellschaft zur Wiederaufarbeitung von Kernbrennstoffen mbH**
**Postfach 220**
**D-7514 Eggenstein-Leopoldshafen 2 (DE)**

(72) Erfinder : **Beaujean, Holger**
**Badener Strasse 14**
**D-7500 Karlsruhe Durlach (DE)**
Erfinder : **Kamphausen, Willi**
**Lindchens Weg 21**
**D-5140 Erkelenz-Schwanenberg (DE)**
Erfinder : **Niephaus, Dieter**
**Kopernikusstrasse 20**
**D-5170 Jülich (DE)**
Erfinder : **Nommensen, Ove**
**Stromgasse 11-13**
**D-5100 Aachen (DE)**

Jouve, 18, rue St-Denis, 75001 Paris, France

Druckabsperrventil und damit versehene Gasflasche

Druckabsperrventil für Gasflaschen zur Lagerung von gefährlichen Gasen und/oder Flüssigkeiten und damit versehene Flasche.

Die Erfindung bezieht sich auf ein Druckabsperrventil für Gasflaschen zur Lagerung von gefährlichen Gasen und/oder Flüssigkeiten mit einem Ventilgehäuse, gegen dessen Ventilsitz ein Kegelteller mittels einer von außen zu betätigenden Gewindespindel gepreßt wird sowie auf eine damit versehene Gasflasche.

Druckabsperrventile der vorstehend genannten Art sind auf breiter Basis in Gebrauch. Bei diesen Absperrventilen wird der Kegelteller überlicherweise nach außen zu vom Ventilsitz abgehoben. Man kennt aber auch Absperrventile mit einem (zum Beispiel durch Kippbewegung) nach innen bzw. zum Druckraum hin abhebenden Kegelteller (siehe FR-A-2 359 342).

Diese gängigen Ventile genügen den strengen Sicherheitsanforderungen nicht, die für die Lagerung und Handhabung von gefährlichen, insbesonderen hochradioaktiven Flüssigkeiten und Gasen gestellt werden, wie sie z. B. bei der Wiederaufarbeitung von Kernbrennstoffen konzentriert anfallen. Solche gefährlichen Stoffe müssen so sicher in einer Gasflasche eingeschlossen werden, daß sie in dieser sowohl transportiert als auch langfristig gelagert werden können. Wichtig ist daher vor allem eine möglichst sichere Absperrung des Inhalts unter Vermeidung möglicher Leckagen sowie die Verhinderung einer ungewollten Freisetzung des gefährlichen Flascheninhalts durch unsachgemäße Betätigung des Ventils. Diese Betätigung soll vorzugsweise auch durch Manipulatoren möglich sein und ferner wird insbesondere auch eine Probenahme unter Aufrechterhaltung von zumindest einer Absperrung sowie eine unfallfreie Lagerung in großer Wassertiefe angestrebt, bei der ein gewisser Druckausgleich mit der Umgebung möglich sein soll, um die Flasche vor zu hoher Druckbelastung bei zunehmendem Gegendruck zu schützen, wobei Leckagen ausgeschlossen sein sollen.

Der Erfindung liegt daher die Aufgabe zugrunde, ein Absperrventil zu schaffen, das zumindest der Forderung nach sicherer Absperrung des Flascheninhalts und verläßlicher Vermeidung einer unbeabsichtigen Öffnung genügt und in seinen weiteren Ausgestaltungen den weiteren genannten Anforderungen gerecht werden kann.

Diese Aufgabe wird erfindungsgemäß durch ein Druckabsperrventil gelöst, das im wesentlichen gekennzeichnet ist durch eine Verdoppelung des äußeren mit zum Druckraum hin abhebenden Kegelteller versehene Ventils durch einen weiteren im Ventilgehäuse näher zum Druckraum hin angeordneten (inneren) Ventilsitz mit einem durch eine Vorspannfeder geschlossenen ebenfalls zum Druckraum hin abhebenden Kegelteller, dessen Stößel im Kegelteller des äußeren Ventils mit Anschlag geführt ist, wobei der jeweilige Ventilweg gesondert durch je einen Spindeltrieb bestimmt wird.

Bei diesem Absperrventil wird die Schließfunktion des inneren Kegeltellers unabhängig von der Schließfunktion des äußeren Kegeltellers durch eine Vorspannfeder gewährleistet und würde bei entsprechender Verbindung mit der Umgebung ein Nachgeben des inneren Kegeltellers bei Überdruck von außen ermöglichen.

Die gezielte Öffnung des inneren Ventils ist dagegen nur durch aufeinanderfolgende Betätigung der Stellmutter für das äußere Ventil und nachfolgend der gesonderten Stellmutter mit Einwirkung auf das innere Ventil möglich, so daß unbeabsichtigte Öffnungen praktisch ausgeschlossen sind.

Der Spindeltrieb für die gleitende Auf- und Abwärtsbewegung des äußeren Ventils ist zu diesem Zweck über ein mit einem oberen und einem unteren Anschlag versehenes Brückenelement als Spindel eines weiteren auf das innere Ventil einwirkenden Spindeltriebes ausgebildet, der für eine weitere Abwärtsbewegung des äußeren Ventils und Mitnahme des darin geführten inneren Ventils sorgt.

Der Stößel des äußeren Ventils wird vorzugsweise durch einen Faltenbalg gegen die Umgebung abgedichtet. Weitere Besonderheiten der Erfindung wie ein gewisser Leerhub des im äußeren Kegelteller geführten Stößels des inneren Kegeltellers, die Anordnung eines seitlichen Stutzens mit Rückschlagsventil oder das Konzept eines kalibrierten Ausschleusraumes zwischen den Ventilen sind den Ansprüchen sowie der weiter unten angegebenen Beschreibung eines Ausführungsbeispiels zu entnehmen.

Das erfindungsgemäße Absperrventil eignet sich — insbesondere bei entsprechender zusätzlicher Anpassung — für Gasflaschen, die für eine Tiefseelagerung von gefährlichen Gasen oder Flüssigkeiten, wie zum Beispiel hochradioaktivem Krypton, verwendet werden können.

Die vorliegende Erfindung umfaßt mithin eine mit einem Absperrventil der vorgenannten Art versehene Gasflasche, die dadurch gekennzeichnet ist, daß der Raum im Ventilgehäuse zwischen dem äußeren und inneren Ventilsitz mit der Umgebung über ein federvorgespanntes Rückschlagventil in Verbindung steht.

Diese Anordnung gestattet einen Druckausgleich zwischen dem Innenraum der Flasche und der Umgebung bei Überdruck von außen und wurde insbesondere für die Tiefseelagerung von radioaktivem Krypton entwickelt. Beim Absinken der in das Wasser entlassenen Flasche kann dann Wasser in das Innere gelangen und je nach Dimensionierung insbesondere der Vorspannfedern für eine Druckentlastung der Flaschenwand sorgen. Der Strömungswiderstand für den Wasserzutritt sollte dabei der Sinkgeschwindigkeit angepaßt werden.

Grundsätzlich kann wohl davon ausgegangen werden, daß die Massenverteilung innerhalb der Flasche eine mit dem Ventil nach unten weisende Ausrichtung der zum Meeresboden sinkenden Flasche herbeiführen wird. Um jedoch auf alle Fälle ein Entweichen von Gas unabhängig von der Lage der Flasche zu verhindern, hat der Verbindungsweg vorzugsweise mindestens zwei Umkehrpunkte und sein Zugang zur Umgebung liegt unter dem (bei aufrechter Stellung der Flasche) höchsten Verbindungswegpunkt.

Weitere Besonderheiten dieser erfindungsgemäßen Gasflasche sind in den Ansprüchen angegeben und der weiter unten folgenden Beschreibung eines Ausführungsbeispiels zu entnehmen.

Die Erfindung wird anhand der nachfolgenden Beschreibung von Ausführungsbeispielen noch besser verständlich werden, die auf die angefügten Zeichnungen Bezug nimmt ; es zeigen :

Figur 1 ein Ausführungsbeispiel für ein Absperrventil gemäß der Erfindung in einem Achsschnitt,

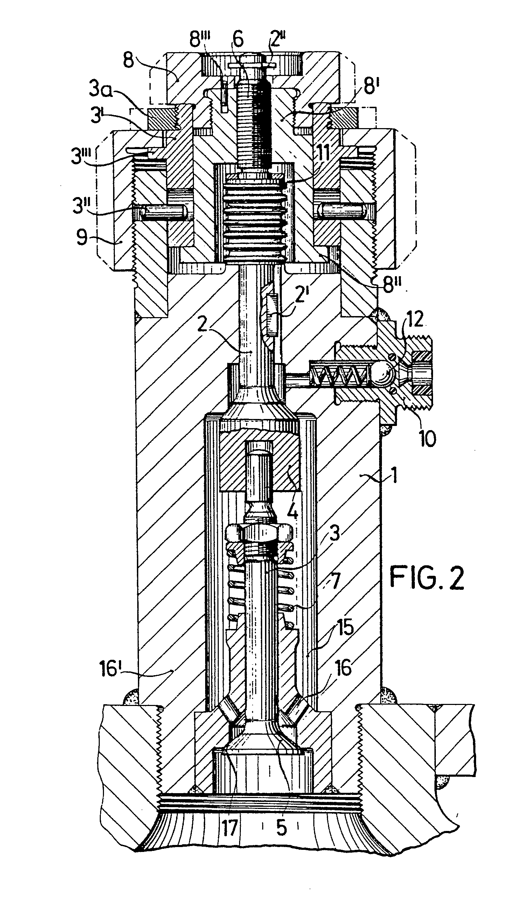

Figur 2 einen vergrößerten Ausschnitt von Figur 1,

Figur 3 den Verschlußkopf einer mit einem solchen Absperrventil versehenen Gasflasche mit zusätzlicher Druckausgleichseinrichtung (ebenfalls im Achsschnitt), und

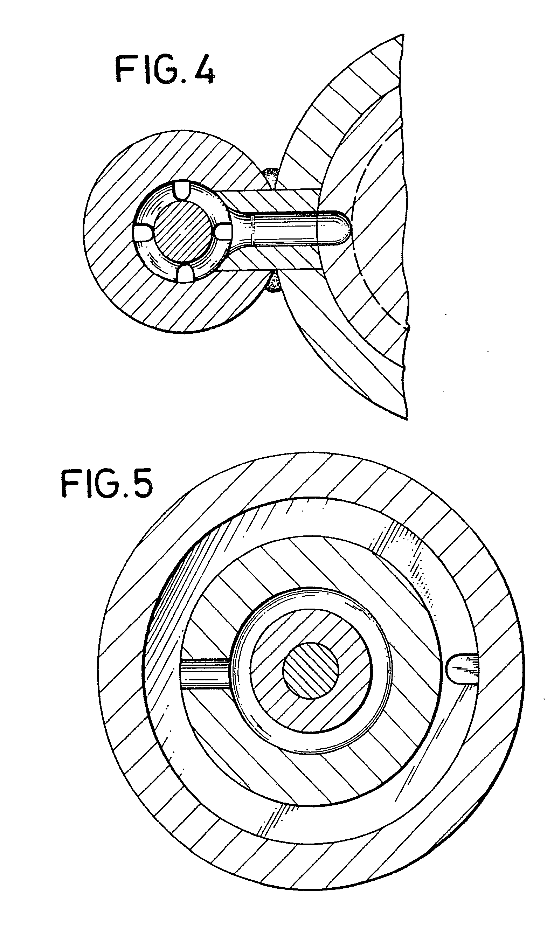

Figuren 4 und 5 Horizontalschnitte durch die Anordnung von Figur 3 wie angegeben.

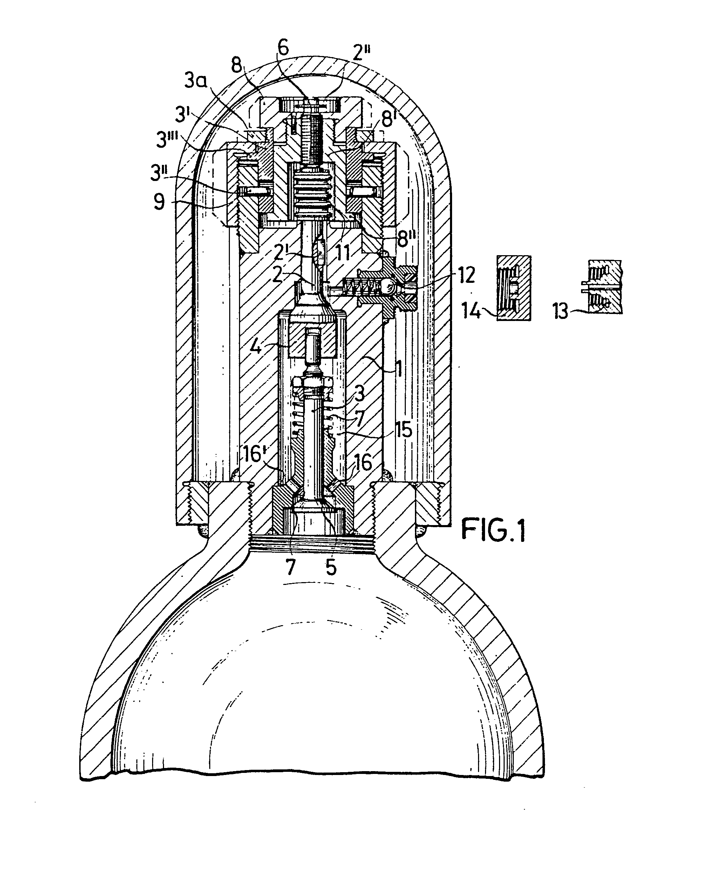

Wie in Figur 1 gezeigt ist, sind im Ventilgehäuse 1 zwei Ventilspindeln oder -stößel 2, 3 mit Kegeltellern 4, 5 hintereinandergeschaltet und hängend eingebaut. Das äußere Ventil wird durch eine Gewindespindel 6, das innere Ventil durch eine vorgespannte Druckfeder 7 geschlossen. Die hängende Bauweise hat den Vorteil, daß nach der drucklosen kryogenen Befüllung der Flaschen die Anfangsdichtkraft beim inneren Ventil durch den sich in der Flasche aufbauenden Gasdruck verstärkt wird.

Das Öffnen und Schließen der beiden Ventile erfolgt über zwei Stellmuttern 8 und 9. Über die Stellmutter 8 wird das äußere Ventil betätigt, dessen Spindel oder Stößel 2 eine Paßfeder 2′ aufweist, die ein Verdrehen der Spindel 2 verhindert und somit deren geradlinige Bewegung erzwingt. Der Ventilhub beträgt 3 mm.

Der Ventilbetrieb für das innere Ventil ist in die Stellmutter 9 eingebaut. Beim Drehen der Stellmutter 9 wird die obere Ventilspindel 2 durch Mitnahme über das Brücken- oder Kopplungselement 3′, geradlinig weiterbewegt. Nach einem Leerhub von 0,5 mm setzt die Spindel 2 über den Kegelteller 4 auf dem Stößel 3 auf und bei weiterem Drehen wird das innere Ventil geöffnet. Der Hub beträgt 3 mm.

Über die Stellmutter 9 wird der komplette Ventiltrieb (der durch die Stellmutter 8 mit damit drehstarrer Drehhülse 8′ und die Spindel 6 mit Anschlagsring 2″ gebildet wird) über ein Kopplungsglied 3′ weiter nach unten bewegt. Dabei wird die Mitnahme über einen Kragen 3‴ bewirkt, über den die Stellmutter 9 übergreift. Die Aufwärtsbewegung des Kopplungsgliedes 3′ wird durch eine Kontermutter 3 a bewirkt, die auf das Kopplungsglied 3′ über die Stellmutter 9 übergreifend aufgeschraubt wird. Die Dicke der übergreifenden Stellmutterkranzes muß dabei geringfügig kleiner sein als der Abstand zwischen Kragen 3‴ und Kontermutter 3 a, damit die Stellmutter 9 überhaupt gedreht werden kann.

Das Kopplungsglied 3′ überträgt seine durch die Stellmutter erzwungene Abwärtsbewegung auf die Drehhülse 8′ über einen unteren Anschlagskragen 8″. Auf die Drehhülse 8′ ist die Stellmutter 8 aufgeschraubt und durch einen Stift 8‴ gegen Abdrehen gesichert. Damit wird die Aufwärtsbewegung des Stößels 2 bei entsprechender Betätigung der Stellmutter 9 erzwungen. Der Abstand zwischen der unteren Auflagefläche der Stellmutter 8 und der Anschlagfläche des Kragens 8″ muß etwas größer sein als die Gesamtlänge des Kopplungsgliedes 3′, damit die Betätigung der Stellmutter 8 nicht behindert wird.

Als Anschlag für die Abwärtsbewegung der Spindel 2 wirkt ein Wellensicherungsring 2″. Als Anschlag für die Auf- und Abwärtsbewegung des Spindelbetriebes für Bewegung der inneren Ventilspindel 3 wirken zwei in senkrechten Langlöchern geführte Paßstifte 3″.

Sind beide Ventile geöffnet, kann die Flasche durch den seitlichen Füll — und Entnahmestutzen 10 gefüllt werden. Über die Stellmutter 9 wird anschließend das innere Ventil und dann über die Stellmutter 8 das äußere Ventil geschlossen.

Beide Hubbewegungen sind durch die genannten Anschläge begrenzt. Ein gegenseitiges Mitdrehen der Stellmuttern durch Betätigen einer der beiden ist nicht möglich, so daß die eindeutige und sichere Bedienbarkeit gewährleistet ist.

Zur Abdichtung der Ventilspindel 2 gegen die Umgebung ist insbesondere ein Faltenbalg 11 vorgesehen. Der Füll- und Entnahmestutzen 10 wird durch ein Rückschlag-Kugelventil 12 (DIN 477, Form E 2) abgedichtet, wobei auf dieses nach der über einen Entnahmeanschluß 13 erfolgten Befüllung bzw. Probennahme eine Verschlußkappe 14 aufgeschraubt wird.

Die vorstehend beschriebene Ventilkonstruktion erlaubt die Entnahme einer Gasprobe, ohne daß die gefüllte Flasche geöffnet wird.

Dabei dient der Raum 15 zwischen dem äußeren und inneren Ventil als Probenraum und hat ein Volumen von etwa 42 ml. Die Durchgangsbohrungen 16 zum unteren Ventilsitz 17 sind so angebracht, daß eine Auffangrinne 16′ für flüssiges Gas vorhanden ist, die zwangsläufig nach dem kryogenen Füllvorgang Reste verflüssigten Gases enthält.

Nachdem die Flasche befüllt worden ist und ihre Gleichgewichtstemperatur angenommen hat, befindet sich im Probenraum eine Gasprobe gleicher Zusammensetzung wie in der Flasche. Diese Gasprobe kann dann über den Füllstutzen 10 zur Analyse entnommen werden. Dabei wird nur das äußere Ventil geöffnet, das innere Ventil bleibt geschlossen. Beim Einschrauben des Entnahmeanschlusses 13 wird zwischen dem Anschluß 13 und dem Entnahmestutzen 10 bereits vor dem Öffnen des Ventils 12 eine gasdichte Verbindung hergestellt. Restgase, die sich nach dem Befüllen in dem Totraum zwischen dem äußeren Ventil und dem Rückschlagventil 12 befinden, können somit nicht entweichen.

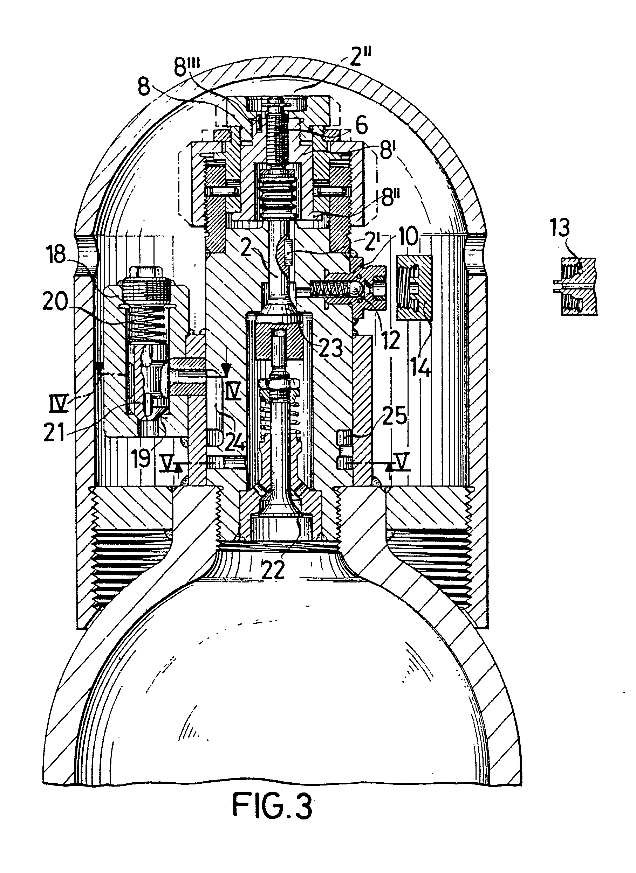

Die in Figur 3 gezeigte Anordnung umfaßt zum einen eine Absperrventilanordnung der in Figur 1 gezeigten Art, die mit den gleichen Bezugszeichen versehen ist und nicht nochmals beschrieben zu werden braucht.

Zusätzlich enthält die in Figur 3 gezeigte Anordnung zum anderen ein weiteres Ventilgehäuse 18 und ist in analoger Weise zu dem in Figur 1 gezeigten Ventil mit redundanten Dichtbarrieren versehen. Im seitlichen Ventilgehäuse 18 befindet sich ein Kegelsitzventil 19, das durch eine vorgespannte Druckfeder 20 geschlossen wird.

Dieses Ventil 21 besitzt keine Bedienungseinheit und kann nur durch äußeren Überdruck geöffnet werden. Die Innenräume beider Ventilgehäuse 1 und 18 sind miteinander verbunden, so daß auch die Ventile 22 und 21 hintereinandergeschaltet sind, während die Ventile 23 und 21 parallel geschaltet sind.

Das Öffnen und Schließen der Ventile 22 und 23 und die Fülloperation erfolgt in der in Zusammenhang mit Figur 1 beschriebenen Weise. Das Gleiche gilt für die Probenahme.

Die speziell für die Versenkung von Gasflaschen mit gefährlichem Inhalt konzipierte Druckausgleichsanordnung, mit der eine übermäßige Druckbelastung der Flaschenwand bei der Absenkung in große Wassertiefen verhindert werden soll, umfaßt eine Druckfeder 20 des Kegelventils 21, die für einen Öffnungsdruck $p_{\ddot{o}21}$ von ca. 15 bar — entsprechend einer Wassertiefe $z_{\ddot{o}}$ von 150 m — ausgelegt ist. Nach Öffnen des Ventils 21 strömt Wasser in das Ventilgehäuse 18. Die Restgase entweichen bzw. werden komprimiert.

Bevor das Wasser vom Nebenventilgehäuse 18 in das Hauptventilgehäuse 1 einströmt, wird es mehrfach über Verbindungskanal 24, 25 umgelenkt. Der gezeigte Verbindungsweg zwischen dem Ventilgehäuse 18 und dem Innenraum der Flasche soll bei beliebiger Lage der Flasche am Meeresboden ein Austreten von Gas verhindern. Beim Absinken wird der Verbindungsweg mit Wasser gefüllt und wirkt damit als natürlicher Verschluß. Die Druckfeder 7 des Ventils 22 ist ebenfalls für einen Öffnungsdruck $p_{\ddot{o}22}$ von 15 bar ausgelegt. Das Ventil öffnet abererst, wenn der äußere Wasserdruck größer als die Summe der Öffnungsdrücke $p_{\ddot{o}21}$ und $p_{\ddot{o}22}$ und des Gasdrucks $p_i$ in der Flasche ist. Beim Öffnen des Ventils 22 entweicht kein Gas, weil die Flasche mit dem Ventil nach unten absinkt. Das weniger dichte Medium Gas befindet sich dann über dem dichteren Medium Wasser. Erst wenn die Flasche auf dem Meeresboden aufschlägt, könnte je nach Lage der Flasche Gas entweichen, wenn der Druckausgleichsvorgang noch nicht vollständig abgeschlossen ist. Dies wird durch die Ventilkonstruktion mit mehrfacher Umlenkung des Wassers im Verbindungsweg verhindert. In jeder Lage der Flasche existiert damit für das Gas eine Wasserbarriere.

Die beschriebene Ventilkonstruktion ermöglicht prinzipiell den sicheren Druckausgleich, wobei die Auslegung in Bezug auf die Ventilhübe, die Druckfedern (Öffnungs- und Schließkräfte) sowie die notwendigen Strömungsquerschnitte jeweils optimiert werden kann.

## Ansprüche

1. Druckabsperrventil für Gasflaschen zur Lagerung von gefährlichen Gasen und/oder Flüssigkeiten mit einem Ventilgehäuse (1), gegen dessen Ventilsitz ein Kegelteller (4) mittels einer von außen zu betätigenden Gewindespindel gepreßt wird, gekennzeichnet durch eine Verdoppelung des äußeren mit zum Druckraum hin abhebendem Kegelteller (4) versehenen Ventils (23) durch einen weiteren im Ventilgehäuse (1) näher zum Druckraum hin angeordneten (inneren) Ventilsitz (17), dessen ebenfalls zum Druckraum hin abhebender Kegelteller (5) durch eine Vorspannfeder (7) in Schließstellung gehalten wird und dessen Stößel (3) im Kegelteller (4) des äußeren Ventils (23) mit Anschlag geführt ist, wobei der jeweilige Ventilweg gesondert durch je einen Spindeltrieb (9, 3', 8', 6 bzw. 8, 8', 6, 2) bestimmt wird.

2. Absperrventil nach Anspruch 1, dadurch gekennzeichnet, daß der Stößel (2) der äußeren Ventils (23) durch einen Faltenbalg (11) gegen die Umgebung abgedichtet ist.

3. Absperrventil nach Anspruch 1 oder 2, dadurch gekennzeichnet, daß der Stößel (3) des inneren Kegeltellers (5) im Kegelteller (4) des äußeren Ventils (23) erst nach völliger Öffnung des äußeren Ventil durch den zugehörigen Spindeltrieb (6) durch Betätigung des Spindeltriebs (9) für das innere Ventil (22) vorzugsweise nach einem etwa 10' des Gesamtweges beider Triebe ausmachenden Leerweg zum Anschlag kommt.

4. Absperrventil nach einem der vorangehenden Ansprüche, dadurch gekennzeichnet, daß das äußere Ventil (23) zu einem seitlichen Anschluß (10) hin öffnet, der mit einem Rückschlagventil (12) versehen ist, welches den seitlichen Anschluß unter der Wirkung einer Vorspannfeder abschließt.

5. Absperrventil nach einem der vorgehenden Ansprüche, dadurch gekennzeichnet, daß der freie Raum (15) zwischen dem äußeren (23) und inneren (22) Ventil für die Ausschleusung bestimmter Gasprobenmengen kalibriert ist.

6. Gasflasche mit einem Absperrventil nach einem der vorangehenden Ansprüche, dadurch gekennzeichnet, daß der Raum im Ventilgehäuse (1) zwischen dem äußeren und inneren Ventilsitz mit der Umgebung über ein federvorgespanntes Rückschlagventil (21) in Verbindung steht.

7. Gasflasche nach Anspruch 6, gekennzeichnet durch einen zumindest zwei Umkehrpunkte aufweisenden Verbindungsweg, dessen Zugang zur Umgebung unter dem (bei aufrechter Stellung der Flasche) höchsten Punkt des Verbindungsweges liegt.

8. Gasflasche nach Anspruch 7, dadurch gekennzeichnet, daß der Verbindungsweg einen schraubenförmigen Kanal oder zwei miteinander verbundene Ringnuten im Ventilgehäuse umfaßt.

9. Gasflasche nach Anspruch 6 bis 8 für die Tiefseelagerung von gefährlichen gasförmigen oder flüssigen Stoffen, dadurch gekennzeichnet, daß der vom Rückschlag-Ventil (21) bei Öffnung der Ventile (21, 22) freigegebene Durchtrittsweg einen der Sinkgeschwindigkeit der Flasche derart angepaßten Querschnitt bzw. Strömungswiderstand aufweist, daß ein unzuträglich hoher äußerer Überdruck auf die Flasche durch genügend rasches Eindringen von Wasser vermieden wird.

**Claims**

1. Pressure shutoff valve for gas bottles for the storage of dangerous gases and/or liquids, with a valve housing (1) against whose valve seat a conical closure member (4) is pressed by means of a screwthreaded spindle to be operated from the outside, characterised by a doubling of the outer valve (23), which is provided with a conical closure member (4) lifting off the seat towards the pressure chamber, by a further (inner) valve seat (17) which is arranged in the valve housing (1) nearer to the pressure chamber and whose conical closure member (5), likewise lifting away from its seat towards the pressure chamber, is held in the closed position by a preloading spring (7) and whose stem (3) is guided with abutment in the conical closure member (4) of the outer valve (23), and the respective valve path in each case is determined by a respective spindle drive (9, 3', 8', 6 and 8, 8', 6, 2 respectively) separately.

2. Shutoff valve according to claim 1, characterised in that the stem (2) of the outer valve (23) is sealed off relatively to the environment by a bellows (11).

3. Shutoff valve according to claim 1 or 2, characterised in that the stem (3) of the inner conical closure member (5) comes to abutment in the conical closure member (4) of the outer valve (23) only after the complete openin of the outer valve by the associated spindle drive (6) by operation of the spindle drive (9) for the inner valve (22) preferably after an idle travel amounting to approximately 10 % of the total travel of the two drives.

4. Shutoff valve according to one of the preceding claims, characterised in that the outer valve (23) opens towards a lateral connection (10) provided with a non-return valve (12) which closes the lateral connection under the influence of a preloading spring.

5. Shutoff valve according to one of the preceding claims, characterised in that the free space (15) between the outer valve (23) and inner valve (22) is calibrated for the regulated discharge of specific gas sample quantities.

6. Gas bottle with a shutoff valve according to one of the preceding claims, characterised in that the space in the valve housing (1) between the outer and inner valve seats communicates with the environment via a spring-preloaded non-return valve (21).

7. Gas bottle according to claim 6, characterised by a communication way which includes at least two reversal points and whose access to the environment is situated below the highest (with the bottle upright) point of the communication way.

8. Gas bottle according to claim 7, characterised in that the communication way comprises a helical duct or two inter-connecting annular grooves in the valve housing.

9. Gas bottle according to claims 6 to 8 for the deep sea storage of dangerous gaseous or liquid substances, characterised in that the throughflow way opened by the non-return valve (21) on opening of the valves (21, 22) has a cross-section or flow resistance so adapted to the speed at which the bottle sinks as to obviate unallowably high external positive pressure on the bottle through sufficiently rapid entry of water.

**Revendications**

1. Soupape d'arrêt de pression pour des bouteilles à gaz pour le stockage de gaz et/ou de liquides dangereux, comportant un boîtier de soupage (1) contre le siège de soupape duquel un plateau conique (4) est pressé à l'aide d'une broche susceptible d'être manœuvrée de l'extérieur, caractérisée par un doublement de la soupape extérieure (23) pourvue d'un plateau conique (4) susceptible d'être soulevé en direction de la chambre de pression, à l'aide d'un siège de soupape (intérieur supplémentaire) (17) disposé dans le boîtier de soupape (1) plus près de la chambre de pression, dont le plateau conique (5) qui est également susceptible d'être soulevé en direction de la chambre de pression, est maintenu dans sa position de fermeture à l'aide d'un ressort préarmé (7) et dont le poussoir (3) est guidé, avec butée, dans le plateau conique (4) de la soupape extérieure, chaque course de soupape étant déterminée séparément par une commande par broche (9, 3', 8', 6 et 8, 8', 6, 2).

2. Soupape d'arrêt selon la revendication 1, caractérisée par le fait que le poussoir (2) de la soupape extérieure (23) est rendu étanche, par rapport à l'environnement, à l'aide d'un soufflet (11).

3. Soupape d'arrêt selon la revendication 1 ou 2, caractérisée par le fait que le poussoir (3) du plateau conique intérieur (5) vient en butée dans le plateau conique (4) de la soupape extérieure (23) seulement après ouverture complète de la soupape extérieure par la commande par broche (6) associée, par la manœuvre de la commande par broche (9) pour la soupape intérieure (22), de préférence après une course à vide à peu près égale à 10 % de la course totale des deux commandes.

4. Soupape d'arrêt selon l'une des revendications précédentes, caractérisée par le fait que la soupape extérieure (23) s'ouvre en direction d'un raccord latéral (10), qui est pourvu d'une soupape de retenue (12) qui obture le raccord latéral sous l'effet d'un ressort préarmé.

5. Soupape d'arrêt selon l'une des revendications précédentes, caractérisée par le fait que l'espace libre (15) entre la soupape extérieure (23) et la soupape intérieure (22) est calibré en fonction de l'évacuation de quantités déterminées d'échantillons de gaz.

6. Bouteille à gaz comportant une soupape d'arrêt de pression selon l'une des revendications précédentes, caractérisée par le fait que l'espace dans le boîtier de soupape (1), entre le siège de soupape extérieur et intérieur, est en liaison avec l'environnement par l'intermédiaire d'une soupape de retenue (21) à ressort préarmé.

7. Bouteille à gaz selon la revendication 6, caractérisée par une voie de liaison comportant au moins deux points d'inversion, et dont l'accès à l'environnement se situe en dessous du point le plus élevé de la voie de liaison (lorsque la bouteille est dans sa position debout).

8. Bouteille à gaz selon la revendication 7, caractérisée par le fait que la voie de liaison comporte un canal de forme hélicoïdale ou deux gorges annulaires reliées entre elles, dans le boîtier de soupape.

9. Bouteille à gaz selon les revendications 6 à 8 pour le stockage en mer profonde de substances gazeuses ou liquides dangereuses, caractérisée par le fait que la voie de passage qui est dégagée par la soupape de retenue (21), lors de l'ouverture des soupapes (21, 22), comporte une section transversale ou une résistance à l'écoulement qui est adaptée de telle manière à la vitesse de plongée de la bouteille, qu'une surpression extérieure de valeur insupportable qui s'exercerait sur la bouteille est évitée par une pénétration suffisamment rapide de l'eau.

FIG.1

FIG.2

FIG.3

FIG. 4

FIG. 5